# FASCICULE DE BREVET EUROPEEN

(11) **EP 3 130 765 B1**
(45) Date de publication et mention de la délivrance du brevet: **16.05.2018**
(21) Numéro de dépôt: 16183309.0
(22) Date de dépôt: 09.08.2016
(51) Int. Cl.: F01D 25/02, F02C 7/047

(54) **BEC DE SEPARATION DEGIVRANT DE COMPRESSEUR DE TURBOMACHINE AXIALE**
ENTEISENDER TRENNUNGSSCHNABEL EINES KOMPRESSORS EINER AXIALEN TURBOMASCHINE
DE-ICING SPLITTER FOR AN AXIAL TURBINE ENGINE COMPRESSOR

(30) Priorité: 13.08.2015 BE 201505508
(43) Date de publication de la demande: 15.02.2017
(73) Titulaire: Safran Aero Boosters SA, 4041 Herstal (BE)
(72) Inventeur: BOUILLON, David, 1200 Woluwe-Saint-Lambert (BE); COLLIN, Clément, 4030 Grivegnée (BE); TERLINDEN, Guillaume, 1030 Schaarbeek (BE)
(74) Mandataire: Lecomte & Partners

(56) Documents cités:
- EP-A1- 2 821 597
- WO-A1-2014/182289
- FR-A1- 2 999 235
- US-A1- 2003 035 719

## Description

### Domaine technique

L'invention a trait à bec de séparation dégivrant de turbomachine axiale. Plus précisément, l'invention concerne le dégivrage d'un bec de séparation par réinjection d'un gaz chaud à l'intérieur du bec. L'invention a également trait à une turbomachine axiale, notamment un turboréacteur d'avion ou un turbopropulseur d'aéronef.

### Technique antérieure

Un turbopropulseur multi-flux d'avion est conçu pour respecter l'environnement. Dans l'optique d'optimiser la poussée et le rendement, tout en réduisant les nuisances sonores, un turbopropulseur travaille avec plusieurs flux d'airs annulaires. Pour cela, le turbopropulseur sépare un flux entrant en un flux primaire et en un flux secondaire. Les flux sont séparés par un bec de séparation circulaire placé en amont du compresseur. A cet endroit, il forme l'entrée d'air du compresseur.

L'air pénétrant dans la turbomachine reste à température atmosphérique au niveau du bec de séparation. Ces températures pouvant descendre à - 50°C en altitude, de la glace peut se former sur le bec avec l'humidité. En vol, cette glace peut s'étendre et s'accumuler jusqu'à former des blocs en tête d'aubes statoriques du compresseur. Ces blocs peuvent aussi modifier la géométrie du bec et influer sur le flux d'air entrant dans le compresseur, ce qui peut en dégrader le rendement.

A force de se développer, les blocs peuvent devenir massifs puis se détacher en raison des vibrations de la turbomachine. Entraînés par le flux entrant, ces blocs peuvent être ingérés par le compresseur, risquant au passage de dégrader les aubes rotoriques. Cette ingestion est particulièrement pénalisante tant elle ne subit pas au préalable un passage dans la soufflante. Pour limiter cette formation de glace, les becs de séparation sont munis d'un dispositif de dégivrage.

Le document US 6,561,760 B2 divulgue un compresseur de turbomachine axiale muni d'un bec de séparation dégivrant. Ce dernier est réchauffé à l'aide d'une circulation d'air chaud prélevé dans un compresseur de la turbomachine. L'air chaud est injecté à l'intérieur du bec de séparation puis s'échappe en s'immisçant dans le crochet amont, entre la paroi externe du bec et la virole externe. Des gorges axiales sont ménagées dans la virole externe pour former un passage dans le crochet, si bien que l'écoulement dégivrant est optimisé. Toutefois, un tel bec de séparation reste coûteux en raison de l'agencement des interfaces. La géométrie des passages est complexe, ce qui nuit au fonctionnement puisque les tolérances de fabrication dégradent les conditions réelles de fonctionnement. Le document WO2014/182289 divulgue un compresseur de turbomachine axiale muni d'un bec de séparation dégivrant selon l'art antérieur.

### Résumé de l'invention

### Problème technique

L'invention a pour objectif de résoudre au moins un des problèmes posés par l'art antérieur. Plus précisément, l'invention a pour objectif de simplifier un bec de séparation dégivrant. L'invention a également pour objectif d'alléger un bec de séparation.

### Solution technique

L'invention a pour objet un bec de séparation de turbomachine axiale, notamment de compresseur de turbomachine axiale, le bec comprenant : une paroi annulaire externe ; une paroi annulaire interne avec un bord amont circulaire lié à la paroi externe, la paroi interne étant configurée pour délimiter un flux annulaire interne séparé par le bec de séparation, notamment un flux primaire ; remarquable en ce que le bord amont de la paroi interne comprend au moins une encoche qui traverse radialement la paroi interne afin de permettre une circulation de fluide dégivrant au travers de la paroi interne.

Selon un mode avantageux de l'invention, la paroi interne comprend au moins une rainure formée dans son épaisseur et qui prolonge axialement la ou chaque encoche.

Selon un mode avantageux de l'invention, la ou chaque encoche présente une forme de lunule, éventuellement un profil en lunule.

Selon un mode avantageux de l'invention, la paroi interne comprend une surface annulaire externe lisse qui délimite axialement la ou chaque encoche, éventuellement la paroi externe s'éloigne progressivement radialement vers l'extérieur de ladite surface externe vers l'aval.

Selon un mode avantageux de l'invention, la paroi interne comprend une portée amont sur laquelle est formé son bord amont, et qui forme une augmentation de diamètre, préférentiellement la portée amont forme une marche annulaire.

Selon un mode avantageux de l'invention, la paroi interne comprend une surface annulaire interne et un chenal annulaire interne formé sur ladite surface interne, ledit chenal annulaire délimitant axialement la ou chaque encoche et/ou étant en communication avec la ou chaque encoche.

Selon un mode avantageux de l'invention, la paroi interne est une virole externe, et/ou supporte une rangée annulaire d'aubes s'étendant radialement vers l'intérieur depuis ladite paroi interne, et/ou supporte un joint annulaire interne, notamment une couche annulaire de matériau abradable.

Selon un mode avantageux de l'invention, la paroi externe comprend au moins un passage en communication avec l'encoche, préférentiellement plusieurs passages chacun en communication avec une des encoches.

Selon un mode avantageux de l'invention, le ou chaque passage est une gorge axiale, éventuellement inclinée par rapport à l'axe central du bec.

Selon un mode avantageux de l'invention, le ou chaque passage est à distance axialement de la ou de chaque encoche de la paroi interne.

Selon un mode avantageux de l'invention, la paroi externe comprend un crochet annulaire, le bord amont de la paroi interne étant fixé audit crochet annulaire, préférentiellement le crochet annulaire présente un creux annulaire tourné vers l'aval dans lequel est monté le bord amont de la paroi interne.

Selon un mode avantageux de l'invention, le crochet annulaire forme l'extrémité amont de la paroi externe, préférentiellement le bec de séparation comprend un bord d'attaque circulaire formé sur le crochet annulaire.

Selon un mode avantageux de l'invention, le bord amont affleure axialement la paroi externe, préférentiellement le bec comprend un jeu mécanique annulaire entre le bord amont et la paroi externe qui est inférieur à la profondeur de la ou de chaque encoche, et/ou inférieur égal à 5,00 mm, plus préférentiellement inférieur ou égal à 2,00 mm, éventuellement inférieur ou égal à 0,50 mm.

Selon un mode avantageux de l'invention, la paroi externe comprend une portion annulaire interne et une portion annulaire externe entre lesquelles est intercalé le bord amont de la paroi interne, la portion interne étant plus épaisse radialement que la portion externe,

Selon un mode avantageux de l'invention, la portion annulaire interne et la portion annulaire externe se chevauchent axialement, préférentiellement la portion externe est généralement d'épaisseur constante, et/ou la portion annulaire externe est la portion principale de la paroi externe.

Selon un mode avantageux de l'invention, le bec comprend un espace annulaire en communication avec la ou chaque encoche, ledit espace étant délimité par la paroi interne et la paroi externe.

Selon un mode avantageux de l'invention, la paroi interne et la paroi externe comprennent des brides annulaires de fixation fixées l'une à l'autre et qui sont disposées en aval de la ou de chaque encoche, lesdites brides délimitant éventuellement l'espace annulaire.

Selon un mode avantageux de l'invention, le bec de séparation est dégivrant et/ou antigivre, notamment configuré pour permettre une circulation d'air chaud, et/ou pour réinjecter l'air dégivrant le flux interne.

Selon un mode avantageux de l'invention, la paroi annulaire externe est destinée à guider un flux annulaire externe à l'intérieur de la turbomachine, notamment un flux secondaire.

Selon un mode avantageux de l'invention, la paroi annulaire interne est à l'intérieur de la paroi externe, lesdites parois étant coaxiales.

Selon un mode avantageux de l'invention, le ou chaque passage est en communication avec le chenal annulaire, et/ou le chenal annulaire est intercalé axialement et/ou radialement entre les passages et les encoches.

Selon un mode avantageux de l'invention, le bord d'attaque sépare un flux amont en un flux externe et en le flux interne qui s'écoulent axialement.

Selon un mode avantageux de l'invention, la paroi externe présente une épaisseur variable, et éventuellement une épaisseur maximale en amont.

Selon un mode avantageux de l'invention, la paroi interne et/ou la paroi externe sont chacune des éléments monoblocs, préférentiellement venus de matière, et/ou elles peuvent être métalliques, et les passages peuvent y être usinés.

L'invention a également pour objet une virole externe de turbomachine, notamment de compresseur de turbomachine axiale, la virole comprenant une rangée annulaire d'aubes, ou une zone annulaire de réception d'aubes éventuellement formée par une rangée annulaire d'ouvertures de réception de plateformes d'aubes, et un bord amont circulaire, remarquable en ce que le bord amont de la virole externe comprend au moins une encoche qui le traverse radialement la afin de permettre une circulation de fluide dégivrant au travers dudit bord.

L'invention a également pour objet un bec de séparation avec une virole externe apte à recevoir une rangée annulaire d'aubes statoriques, la virole externe présentant un bord amont circulaire fixée audit bec, remarquable en ce que le bord amont comprend au moins une encoche qui traverse radialement la virole externe afin de permettre une circulation de fluide dégivrant au travers de la virole externe. Selon cette approche, le bec de séparation est ici assimilé à la paroi externe présentée ci-dessus.

L'invention a également pour objet un compresseur de turbomachine comprenant un bec de séparation, remarquable en ce que le bec est conforme à l'invention.

L'invention a également pour objet une turbomachine comprenant un bec de séparation, remarquable en ce que le bec est conforme à l'invention.

Selon un mode avantageux de l'invention, comprend un compresseur, notamment un compresseur haute pression, et un conduit de prélèvement d'air en communication avec ledit compresseur et la ou chaque encoche afin d'alimenter en air dégivrant le bec de séparation.

Selon un mode avantageux de l'invention, la turbomachine comprend un compresseur, notamment un compresseur basse pression, le bec de séparation formant l'entrée dudit compresseur.

De manière générale, les modes avantageux de chaque objet de l'invention sont également applicables aux autres objets de l'invention. Dans la mesure du possible, chaque objet de l'invention est combinable aux autres objets.

### Avantages apportés

L'invention simplifie le bec de séparation tout en formant une antichambre pour le gaz chaud. Le nombre de composants est réduit, et la forme de la virole permet de gérer l'écoulement grâce au calibrage des encoches. En effet, leur section de passage limite l'écoulement qui les traverse. Par ailleurs, cette solution permet de réduire la masse puisque la paroi extérieure peut rester d'épaisseur constante au-dessus du bord amont de la paroi interne.

L'agencement rend le bec économique. En effet, les encoches sont des formes simples à réaliser ; sur des longueurs réduites. Lorsqu'elles sont usinées, la matière à enlever est limitée. La zone où elles sont taillées est facilement accessible et présente une raideur adaptée aux efforts de coupe. L'effet de la dilation sur la section passante des encoches est moindre. L'agencement permet de conserver une efficacité de dégivrage indépendamment de la température, ce qui est particulièrement important pour des parois susceptibles de givrer.

La présente architecture optimise le fonctionnement puisque le réchauffement est permis en tout point et de manière homogène. L'épaisseur à l'intérieur de la paroi externe est compensée par les gorges qui y sont formées. Ainsi, la température de l'air d'apport peut être réduite tout en maintenant la sécurité.

### Brève description des dessins

La figure 1 représente une turbomachine axiale selon l'invention.
La figure 2 est un schéma d'un compresseur de turbomachine selon l'invention.
La figure 3 illustre un bec de séparation selon l'invention.
La figure 4 est un agrandissement de la pointe amont du bec de séparation selon l'invention.
La figure 5 montre une paroi interne selon l'invention observée depuis l'intérieur.

**Description des modes de réalisation**

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

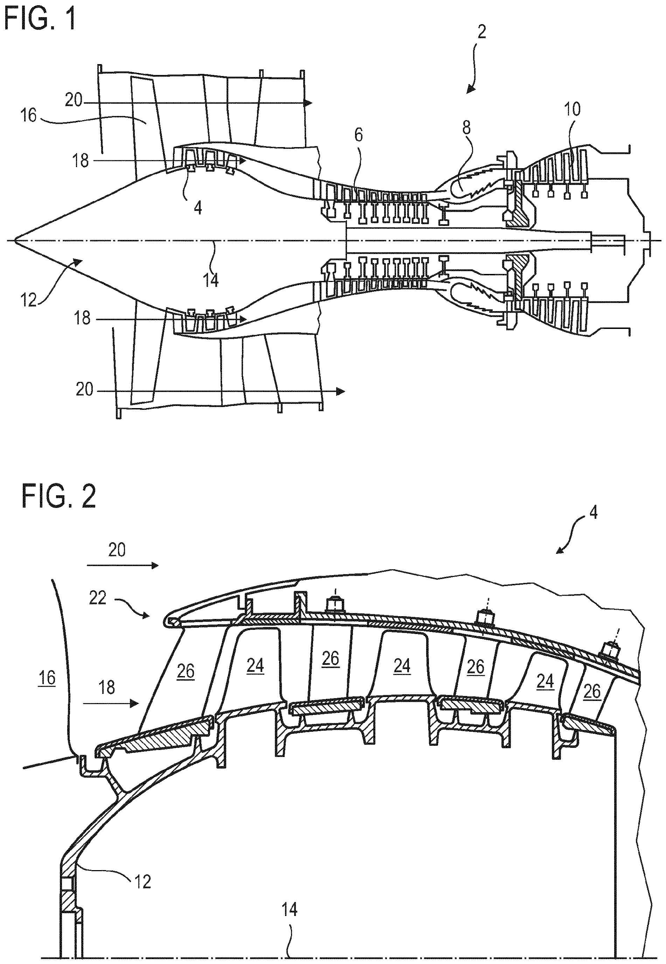

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. Chacun d'eux s'écoule axialement. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression statique. Les aubes statoriques 26 s'étendent essentiellement radialement depuis un carter extérieur ou une virole extérieure, et peuvent y être fixées et immobilisées à l'aide d'axes. Alternativement, elles peuvent être soudées par faisceau laser. Certaines aubes peuvent être différentes du reste des aubes de leur rangée.

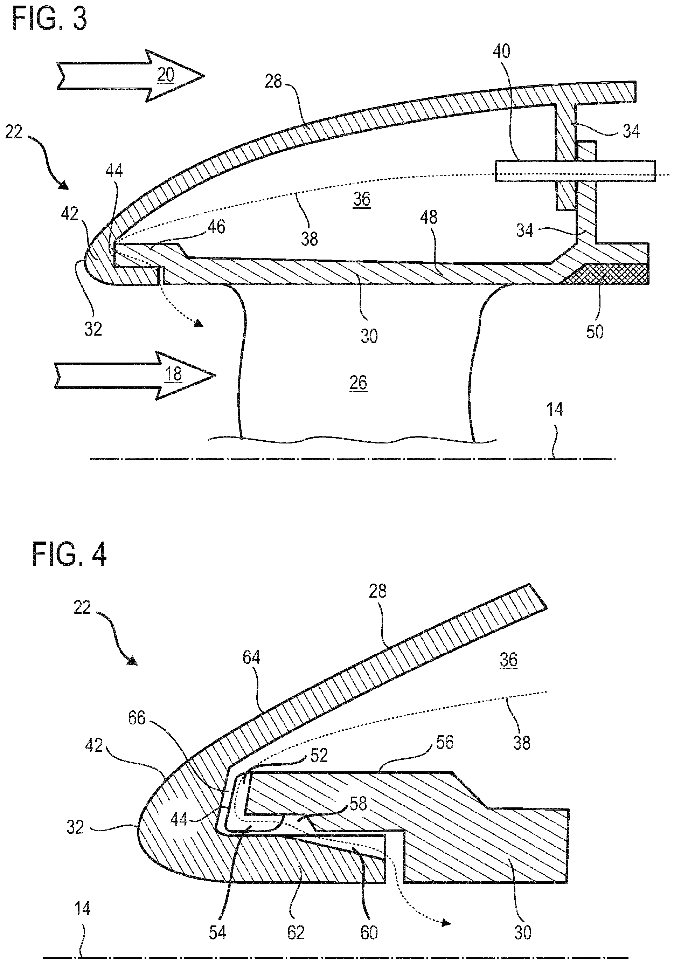

La figure 3 représente le bec de séparation 22 d'un flux entrant dans la turbomachine. Le bec de séparation 22 peut correspondre à celui qui est en entrée du compresseur basse pression illustré en figure 2.

Le bec de séparation 22 comprend une paroi annulaire externe 28 et une paroi annulaire interne 30. Ces parois (28 ; 30) sont concentriques, elles guident et délimitent le flux secondaire 20 et le flux primaire 18 respectivement. Plus exactement, ces flux (18 ; 20) sont séparés par le bord d'attaque circulaire 32, ou bord de séparation, qui forme l'extrémité amont dudit bec 22. Il reçoit en premier les ingestions.

Les parois (28 ; 30) peuvent comprendre des brides annulaires de fixation 34, éventuellement fixées l'une à l'autre à l'aide d'axes de fixation (non représentés) répartis angulairement. Elles peuvent former une cloison étanche entre les parois (28 ; 30). En combinaison, les parois (28 ; 30) délimitent un espace annulaire 36 qui est fermé en aval grâce aux brides de fixation 34. Cet espace annulaire 36 est alimenté en fluide de dégivrant, en l'occurrence du gaz chaud. L'écoulement 38 ou la présence de gaz chaud permet de dégivrer et/ou de prévenir l'accrétion de glace sur le bec de séparation 22, que ce soit au contact du flux primaire 18 ou du flux secondaire 20.

Le bec de séparation 22 peut comprendre un conduit d'alimentation 40 en air chaud. Il peut être un conduit de prélèvement 40 d'air d'un compresseur de la turbomachine, par exemple le compresseur haute pression. Le prélèvement est avantageusement en aval dudit compresseur, optionnellement au niveau de son dernier étage de compression. Le conduit 40 est en communication de l'espace annulaire interne 36 du bec, et donc du passage de réinjection de fluide dégivrant dans le compresseur. Le passage peut former un échappement.

La paroi externe 28 peut comprendre un crochet annulaire 42 formant son extrémité amont, et notamment le bord d'attaque 32. Le bord amont 44 de la paroi interne 30 est fixé audit crochet annulaire 42, ce qui permet de maintenir l'extrémité amont de la paroi interne 30 qui est en porte-à-faux. Un centrage et une mise en concordance des surfaces délimitant le flux primaire 18 sont également assurés. Le crochet annulaire 42 peut présenter un creux annulaire ouvert vers l'aval. Le creux reçoit le bord amont 44 de la paroi interne 30 pour l'y lier.

La paroi interne 30 présente généralement une configuration en plusieurs tronçons, notamment de différents diamètres. Elle comprend une portée amont 46 de montage avec le bord amont et est en contact de la paroi externe 28. La portée amont 46 forme une augmentation de diamètre et présente deux marches annulaires, une interne et une externe. Un tronçon principal 48, ou tronçon central, peut supporter une rangée annulaire d'aubes statorique 26. Un tronçon aval peut accueillir un joint annulaire interne 50, notamment une couche annulaire de matériau abradable 50. Une telle couche 50 forme un joint d'étanchéité apte à s'effriter en cas de contact avec une aube rotorique lors du fonctionnement de la turbomachine.

La figure 4 est un agrandissement du bec de séparation 22 au niveau du bord d'attaque 32. Il y est représenté la paroi interne 30 et la paroi externe 28, et en particulier leur interface aménagée pour permettre l'écoulement dégivrant 38.

Le passage permettant l'écoulement du fluide dégivrant 38 présente au moins une encoche 52 formée dans le bord amont 44 de la paroi interne 30. Préférentiellement, le bord amont 44 présente une pluralité d'encoches 52 réparties sur son périmètre qui sont en communication avec l'espace annulaire 36 recevant le fluide dégivrant. Chaque encoche 52 forme un redan sur le bord 44, une brèche pénétrant axialement dans la paroi interne 30. Chaque encoche 52 traverse radialement le bord amont 44, elle facilite le passage de l'extérieur vers l'intérieur de la paroi interne 30. En l'occurrence, les encoches 52 permettent l'écoulement du fluide 38 dégivrant vers l'intérieur du bec 22, vers l'intérieur de la surface interne de la paroi interne 30, ce qui optimise le dégivrage. Les encoches 52 peuvent chacune avoir une forme courbe, telle une lunule. Par lunule, on peut entendre, la surface interne d'un premier disque à laquelle est retirée la surface d'un autre disque coupant le premier disque en deux points.

Chaque encoche 52 est prolongée par une rainure 54 taillée dans l'épaisseur radiale de la paroi interne 30. Elle prolonge axialement une encoche 52 et suit la surface externe de la paroi externe 28 qui est en regard. La réunion des parois permet de former des conduits avec un profil généralement fermé pour canaliser et maîtriser l'écoulement dégivrant 38.

La paroi interne 30 comprend une surface annulaire externe 56 lisse qui délimite axialement les encoches 52, et qui se prolonge en amont entre les encoches 52. La paroi externe 28 s'éloigne progressivement vers l'extérieur radialement de ladite surface externe 56 vers l'aval. Ainsi, l'espace annulaire 36 s'étend jusqu'au bord amont 44 de la paroi interne 30, favorisant l'apport de calories jusqu'au bord d'attaque 32.

La paroi interne 32 comprend éventuellement une surface interne avec un chenal annulaire interne 58 s'enfonçant radialement vers l'extérieur dans l'épaisseur de la paroi interne 30. Ce chenal annulaire 58 communique avec chaque encoche 52 en les délimitant. Plus précisément, chaque rainure axiale 54 débouche sur le chenal annulaire 58 qui permet de les réunir.

La paroi externe 28 comprend au moins un passage 60 en communication avec une encoche 52. Préférentiellement elle comprend plusieurs passages 60 qui sont chacun mis en correspondance avec au moins une encoche 52 pour permettre un passage de l'une à l'autre. Par exemple, un passage 60 peut être en face d'au moins trois encoches 52 et communiquer avec elles. Le ou chaque passage 60 est une gorge axiale dont le fond est éventuellement inclinée par rapport à l'axe de rotation de la turbomachine 14, cet axe coïncidant éventuellement avec l'axe central 14 du bec 2. Les passages 60 inclinés permettent une meilleure réinjection de l'écoulement 38 dans le flux primaire. La formation de tourbillons est réduite et le rendement de la turbomachine est préservée. Alternativement, un ou plusieurs passages sont des orifices traversant la paroi externe.

Les passages 60 et les encoches 52 peuvent communiquer via le chenal annulaire 58, ce qui autorise des écarts de positionnement. Les passages 60 et les encoches 52 peuvent ainsi être distantes axialement et angulairement l'une de l'autre puisque le chenal est intercalé à leur interface. Cependant, la présence du chenal est optionnelle puisque les passages et les encoches peuvent communiquer directement.

Le crochet annulaire 42 de la paroi externe 28 comprend une portion annulaire interne 62 et une portion annulaire externe 64 qui occupent un même tronçon axial. Entre elles est glissé le bord amont 44 de la paroi interne 30. La portion interne 62 est plus épaisse radialement que la portion externe 64 pour offrir davantage de résistance puisque c'est elle qui soutient la paroi interne 30. La portion externe 64 est généralement d'épaisseur constante, elle forme la portion principale de la paroi externe 28 en raison de sa longueur axiale. Le bord amont 44 de la paroi interne 30 épouse axialement le crochet annulaire 42. Ce bord 44 en affleure le fond. Toutefois, un jeu mécanique annulaire 66 les sépare. Ce jeu 66 est inférieur à la profondeur axiale des encoches 52. Il peut être inférieur ou égal à 0,05 mm.

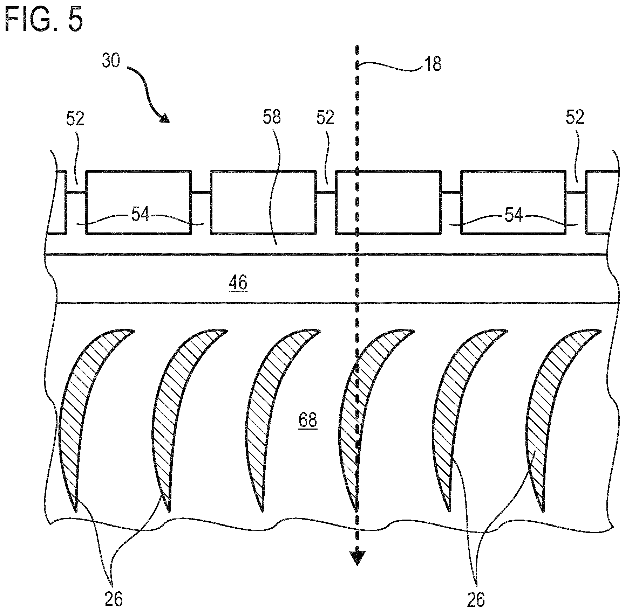

La figure 5 montre une vue interne d'une portion de la paroi interne 30. Il y est représenté une série d'aubes statoriques 26, ainsi que le flux primaire 18. Par soucis de clarté, la paroi externe n'est pas représentée.

La paroi interne supporte plusieurs aubes statoriques 26 d'une rangée annulaire. Le bord amont 44 forme des créneaux entre les encoches 52. Ces dernières s'enfoncent dans le bord amont 44 vers les aubes 26, puis se prolongent dans cette même direction grâce à leurs rainures 54. Ces dernières se rejoignent dans le chenal annulaire 58, qui est généralement formé en position centrale de la portée amont 46, et/ou sur la marche interne de la paroi interne 30.

Les pales des aubes 26 peuvent être directement fixées à surface interne 68 de la virole. Alternativement, elles peuvent présenter des plateformes ou des bulbes soudés dans des ouvertures ménagées dans la virole. La paroi interne 30 peut être une virole externe en entrée de compresseur.

## Revendications

1. Bec de séparation (22) de turbomachine axiale (2), notamment de compresseur (4 ; 6) de turbomachine axiale (2), le bec (22) comprenant :
une paroi annulaire externe (28);
une paroi annulaire interne (30) avec un bord amont circulaire (44) lié à la paroi externe (28), la paroi interne (30) étant configurée pour délimiter un flux annulaire interne (18) séparé par le bec de séparation (22), notamment un flux primaire ;
**caractérisé en ce que**
le bord amont (44) de la paroi interne (30) comprend au moins une encoche (52) qui traverse radialement la paroi interne (30) afin de permettre une circulation de fluide dégivrant (38) au travers de la paroi interne (30).

2. Bec de séparation (22) selon la revendication 1, **caractérisé en ce que** la paroi interne (30) comprend au moins une rainure formée dans son épaisseur et qui prolonge axialement la ou chaque encoche (52).

3. Bec de séparation (22) selon l'une des revendications 1 à 2, **caractérisé en ce que** la ou chaque encoche (52) présente une forme de lunule, éventuellement un profil en lunule.

4. Bec de séparation (22) selon l'une des revendications 1 à 3, **caractérisé en ce que** la paroi interne (30) comprend une surface annulaire externe (56) lisse qui délimite axialement la ou chaque encoche (52), éventuellement la paroi externe (28) s'éloigne progressivement radialement vers l'extérieur de ladite surface externe (56) vers l'aval.

5. Bec de séparation (22) selon l'une des revendications 1 à 4, **caractérisé en ce que** la paroi interne (30) comprend une portée amont (46) sur laquelle est formé son bord amont (44), et qui forme une augmentation de diamètre, préférentiellement la portée amont (44) forme une marche annulaire.

6. Bec de séparation (22) selon l'une des revendications 1 à 5, **caractérisé en ce que** la paroi interne (30) comprend une surface annulaire interne (66) et un chenal annulaire (58) interne formé sur ladite surface interne, ledit chenal annulaire (58) délimitant axialement la ou chaque encoche (52) et/ou étant en communication avec la ou chaque encoche (52).

7. Bec de séparation (22) selon l'une des revendications 1 à 6, **caractérisé en ce que** la paroi interne (30) est une virole externe, et/ou supporte une rangée annulaire d'aubes (26) s'étendant radialement vers l'intérieur depuis ladite paroi interne (30), et/ou supporte un joint annulaire interne, notamment une couche annulaire de matériau abradable (50).

8. Bec de séparation (22) selon l'une des revendications 1 à 7, **caractérisé en ce que** la paroi externe (28) comprend au moins un passage (60) en communication avec l'encoche (52), préférentiellement plusieurs passages (60) chacun en communication avec une des encoches (52).

9. Bec de séparation (22) selon l'une des revendications 1 à 8, **caractérisé en ce que** la paroi externe (28) comprend un crochet annulaire (42), le bord amont (44) de la paroi interne (30) étant fixé audit crochet annulaire (42), préférentiellement le crochet annulaire (42) présente un creux annulaire tourné vers l'aval dans lequel est monté le bord amont (44) de la paroi interne (30).

10. Bec de séparation (22) selon la revendication 9, **caractérisé en ce que** le crochet annulaire (42) forme l'extrémité amont de la paroi externe (28), préférentiellement le bec de séparation (22) comprend un bord d'attaque (32) circulaire formé sur le crochet annulaire (42).

11. Bec de séparation (22) selon l'une des revendications 1 à 10, **caractérisé en ce que** le bord amont (44) affleure axialement la paroi externe (28), préférentiellement le bec (22) comprend un jeu mécanique annulaire (66) entre le bord amont (44) et la paroi externe (28) qui est inférieur à la profondeur de la ou de chaque encoche (52), et/ou inférieur égal à 5,00 mm, plus préférentiellement inférieur ou égal à 2,00 mm, éventuellement inférieur ou égal à 0,50 mm.

12. Bec de séparation (22) selon l'une des revendications 1 à 11, **caractérisé en ce que** la paroi externe (28) comprend une portion annulaire interne (62) et une portion annulaire externe (64) entre lesquelles est intercalé le bord amont (44) de la paroi interne (30), la portion interne (62) étant plus épaisse radialement que la portion externe (64).

13. Bec de séparation (22) selon l'une des revendications 1 à 12, **caractérisé en ce qu'**il comprend un espace annulaire (36) en communication avec la ou chaque encoche (52), ledit espace (36) étant délimité par la paroi interne (30) et la paroi externe (28).

14. Bec de séparation (22) selon l'une des revendications 1 à 13, **caractérisé en ce que** la paroi interne (30) et la paroi externe (28) comprennent des brides annulaires de fixation (34) fixées l'une à l'autre et qui sont disposées en aval de la ou de chaque encoche (52), lesdites brides (34) délimitant éventuellement l'espace annulaire (36).

15. Turbomachine (2) comprenant un bec de séparation (22), **caractérisée en ce que** le bec (22) est conforme à l'une des revendications 1 à 14, préférentiellement la turbomachine comprend un compresseur (4 ; 6), notamment un compresseur haute pression (6), et un conduit de prélèvement d'air (40) en communication avec ledit compresseur (6) et la ou chaque encoche (52) afin d'alimenter en air dégivrant le bec de séparation (22).

## Patentansprüche

1. Trennnase (22) für eine axiale Turbomaschine (2), insbesondere für einen Verdichter (4; 6) einer axialen Turbomaschine (2), wobei die Trennnase (22) umfasst:
eine äußere ringförmige Wand (28);
eine innere ringförmige Wand (30) mit einer kreisförmigen stromaufwärtigen Kante (44), die mit der externen Wand (28) verbunden ist, wobei die innere Wand (30) dafür ausgelegt ist, einen durch die Trennnase (22) abgetrennten inneren ringförmigen Strom (18) zu begrenzen, insbesondere einen Primärstrom;
**dadurch gekennzeichnet, dass**
die stromaufwärtige Kante (44) der inneren Wand (30) mindestens eine Einkerbung (52) umfasst, die radial durch die innere Wand (30) verläuft, um das Zirkulieren von Enteisungsflüssigkeit (38) durch die innere Wand (30) zu gestatten.

2. Trennnase (22) nach Anspruch 1, **dadurch gekennzeichnet, dass** die innere Wand (30) mindestens einen Schlitz umfasst, der in ihrer Dicke gebildet ist und der die oder jede Einkerbung (52) axial verlängert.

3. Trennnase (22) nach einem der Ansprüche 1 und 2, **dadurch gekennzeichnet, dass** die oder jede Einkerbung (52) sichelförmig ist, eventuell ein sichelförmiges Profil hat.

4. Trennnase (22) nach einem der Ansprüche 1 bis 3, **dadurch gekennzeichnet, dass** die innere Wand (30) eine glatte äußere ringförmige Oberfläche (56) aufweist, welche die oder jede Einkerbung (52) axial begrenzt, wobei die äußere Wand (28) eventuell progressiv radial zur Außenseite der besagten äußeren Oberfläche (56) in Abwärtsrichtung abweicht.

5. Trennnase (22) nach einem der Ansprüche 1 bis 4, **dadurch gekennzeichnet, dass** die innere Wand (30) eine stromaufwärtige Auflagefläche (46) umfasst, woran ihre stromaufwärtige Kante (44) gebildet ist, und die eine Vergrößerung des Durchmessers bildet, wobei die stromaufwärtige Auflagefläche (44) bevorzugt eine ringförmige Stufe bildet.

6. Trennnase (22) nach einem der Ansprüche 1 bis 5, **dadurch gekennzeichnet, dass** die innere Wand (30) eine innere ringförmige Oberfläche (66) und einen an dieser inneren Oberfläche gebildeten inneren ringförmigen Kanal (58) umfasst, wobei der ringförmige Kanal (58) die oder jede Einkerbung (62) axial begrenzt und/oder mit der oder jeder Einkerbung (52) in Verbindung steht.

7. Trennnase (22) nach einem der Ansprüche 1 bis 6, **dadurch gekennzeichnet, dass** die innere Wand (30) eine äußere Hülse ist und/oder eine ringförmige Reihe von Schaufeln (26) trägt, die sich von dieser inneren Wand (30) radial nach innen erstrecken, und/oder eine innere ringförmige Dichtung trägt, insbesondere eine ringförmige Schicht aus abreibbarem Material (50).

8. Trennnase (22) nach einem der Ansprüche 1 bis 7, **dadurch gekennzeichnet, dass** die äußere Wand (28) mindestens einen Durchgang (60) in Verbindung mit der Einkerbung (52), und bevorzugt mehrere Durchgänge (60), jeder in Verbindung mit einer der Einkerbungen (52), umfasst.

9. Trennnase (22) nach einem der Ansprüche 1 bis 8, **dadurch gekennzeichnet, dass** die äußere Wand (28) einen ringförmigen Haken (42) umfasst, wobei die stromaufwärtige Kante (44) der inneren Wand (30) an diesem ringförmigen Haken (42) befestigt ist, wobei der ringförmige Haken (42) bevorzugt eine ringförmige Ausnehmung aufweist, die nach unten gerichtet ist und worin die stromaufwärtige Kante (44) der inneren Wand (30) montiert ist.

10. Trennnase (22) nach Anspruch 9, **dadurch gekennzeichnet, dass** der ringförmige Haken (42) das stromaufwärtige Ende der äußeren Wand (28) bildet, wobei die Trennnase (22) bevorzugt eine kreisförmige Anströmkante (32), die an dem ringförmigen Haken (42) gebildet ist, umfasst.

11. Trennnase (22) nach einem der Ansprüche 1 bis 10, **dadurch gekennzeichnet, dass** die stromaufwärtige Kante (44) axial bündig mit der äußeren Wand (28) liegt, wobei die Trennnase (22) bevorzugt ein ringförmiges mechanisches Spiel (66) zwischen der stromaufwärtigen Kante (44) und der äußeren Wand (28) umfasst, das weniger als die Tiefe der oder jeder Einkerbung (52) beträgt und/oder kleiner oder gleich 5,00 mm, bevorzugter kleiner oder gleich 2,00 mm und eventuell kleiner oder gleich 0,50 mm ist.

12. Trennnase (22) nach einem der Ansprüche 1 bis 11, **dadurch gekennzeichnet, dass** die äußere Wand (28) einen inneren ringförmigen Abschnitt (62) und einen äußeren ringförmigen Abschnitt (64) umfasst, zwischen denen die stromaufwärtige Kante (44) der inneren Wand (30) angeordnet ist, wobei der innere Abschnitt (62) radial dicker als der äußere Abschnitt (64) ist.

13. Trennnase (22) nach einem der Ansprüche 1 bis 12, **dadurch gekennzeichnet, dass** sie einen ringförmigen Raum (36) in Verbindung mit der oder jeder Einkerbung (52) umfasst, wobei dieser Raum (36) durch die innere Wand (30) und die äußere Wand (28) begrenzt wird.

14. Trennnase (22) nach einem der Ansprüche 1 bis 13, **dadurch gekennzeichnet, dass** die innere Wand (30) und die äußere Wand (28) ringförmige Befestigungsflansche (34) umfassen, die aneinander befestigt sind und die stromabwärts von der oder jeder Einkerbung (52) angeordnet sind, wobei diese Flansch (34) eventuell den ringförmigen Raum (36) begrenzen.

15. Turbomaschine (2), umfassend eine Trennnase (22), **dadurch gekennzeichnet, dass** die Trennnase (22) in Übereinstimmung mit einem der Ansprüche 1 bis 14 ist, wobei die Turbomaschine bevorzugt einen Verdichter (4; 6), insbesondere einen Hochdruckverdichter (6), und eine Luftentnahmeleitung (40) in Verbindung mit dem Verdichter (6) und der oder jeder Einkerbung (52) umfasst, um die Trennnase (22) mit Enteisungsluft zu versorgen.

## Claims

1. Splitter nose (22) for an axial turbomachine (2), notably for a compressor (4; 6) of an axial turbomachine (2), the splitter nose (22) comprising:
an external annular wall (28);
an internal annular wall (30) with a circular upstream edge (44) connected to the external wall (28), the internal wall (30) being configured to delimit an internal annular flow (18) separated by the splitter nose (22), notably a primary flow;
**characterized in that**
the upstream edge (44) of the internal wall (30) comprises at least one notch (52) which passes radially through the internal wall (30) so as to allow de-icing fluid (38) to circulate through the internal wall (30).

2. Splitter nose (22) according to Claim 1, **characterized in that** the internal wall (30) comprises at least one slot formed in its thickness and which extends the or each notch (52) axially.

3. Splitter nose (22) according to one of Claims 1 and 2, **characterized in that** the or each notch (52) is crescent-shaped, possibly having a crescent-shaped profile.

4. Splitter nose (22) according to one of Claims 1 to 3, **characterized in that** the internal wall (30) comprises a smooth external annular surface (56) which axially delimits the or each notch (52), the external wall (28) potentially diverging progressively radially towards the outside of the said external surface (56) in the downstream direction.

5. Splitter nose (22) according to one of Claims 1 to 4, **characterized in that** the internal wall (30) comprises an upstream bearing surface (46) on which its upstream edge (44) is formed, and which forms an increase in diameter, the upstream bearing surface (44) preferably forming an annular step.

6. Splitter nose (22) according to one of Claims 1 to 5, **characterized in that** the internal wall (30) comprises an internal annular surface (66) and an internal annular channel (58) formed on the said internal surface, the said annular channel (58) axially delimiting the or each notch (52) and/or being in communication with the or each notch (52).

7. Splitter nose (22) according to one of Claims 1 to 6, **characterized in that** the internal wall (30) is an external shroud and/or supports an annular row of blades (26) extending radially towards the inside from the said internal wall (30), and/or supports an internal annular seal, notably an annular layer of abradable material (50).

8. Splitter nose (22) according to one of Claims 1 to 7, **characterized in that** the external wall (28) comprises at least one passage (60) in communication with the notch (52), and preferably several passages (60) each in communication with one of the notches (52).

9. Splitter nose (22) according to one of Claims 1 to 8, **characterized in that** the external wall (28) comprises an annular hook (42), the upstream edge (44) of the internal wall (30) being fixed to the said annular hook (42), the annular hook (42) preferably having an annular recess facing in the downstream direction and in which the upstream edge (44) of the internal wall (30) is mounted.

10. Splitter nose (22) according to Claim 9, **characterized in that** the annular hook (42) forms the upstream end of the external wall (28), the splitter nose (22) preferably comprising a circular leading edge (32) formed on the annular hook (42).

11. Splitter nose (22) according to one of Claims 1 to 10, **characterized in that** the upstream edge (44) lies axially flush with the external wall (28), the splitter nose (22) preferably comprising an annular mechanical clearance (66) between the upstream edge (44) and the external wall (28) which is less than the depth of the or each notch (52), and/or less than or equal to 5.00 mm, more preferably less than or equal to 2.00 mm, and possibly less than or equal to 0.50 mm.

12. Splitter nose (22) according to one of Claims 1 to 11, **characterized in that** the external wall (28) comprises an internal annular portion (62) and an external annular portion (64) between which the upstream edge (44) of the internal wall (30) is interposed, the internal portion (62) being radially thicker than the external portion (64).

13. Splitter nose (22) according to one of Claims 1 to 12, **characterized in that** it comprises an annular space (36) in communication with the or each notch (52), the said space (36) being delimited by the internal wall (30) and the external wall (28).

14. Splitter nose (22) according to one of Claims 1 to 13, **characterized in that** the internal wall (30) and the external wall (28) comprise annular fixing flanges (34) fixed to one another and which are positioned downstream of the or each notch (52), the said flanges (34) potentially delimiting the annular space (36).

15. Turbomachine (2) comprising a splitter nose (22), **characterized in that** the splitter nose (22) is in accordance with one of Claims 1 to 14, the turbomachine preferably comprising a compressor (4; 6), notably a high-pressure compressor (6), and an air bleed pipe (40) in communication with the said compressor (6) and the or each notch (52) so as to supply the splitter nose (22) with de-icing air.
